# EUROPEAN PATENT APPLICATION

(11) **EP 2 562 146 A1**
(43) Date of publication of application: **27.02.2013**
(21) Application number: 10850047.1
(22) Date of filing: 22.04.2010
(51) Int. Cl.: C03C 4/12, C03C 3/06

(54) **QUANTUM DOT-GLASS COMPOSITE LUMINESCENT MATERIAL AND MANUFACTURING METHOD THEREOF**

(71) Applicant: Ocean's King Lighting Science&Technology Co., Ltd., Guangdong 518054 (CN)
(72) Inventor: ZHOU, Mingjie, Shenzhen Guangdong 518054 (CN); MA, Wenbo, Shenzhen Guangdong 518054 (CN); QIAO, Yanbo, Shenzhen Guangdong 518054 (CN)
(74) Representative: Johnson, Richard Alan
(86) International application number: PCT/CN2010/072052
(87) International publication number: WO 2011/130913

(57) **Abstract**

A quantum dot-glass composite luminescent material is provided, the base of which is nanometer pore glass. The nanometer pore glass is doped with luminescent quantum dot. A manufacturing method for the luminescent material is also provided, which includes the following steps: step one, preparing an aqueous or organic solution of a single luminescent quantum dot, or a mixed aqueous or organic solution of two or more luminescent quantum dots; step two, immersing the nanometer pore glass in the solution of step one for at least ten minutes; step three, taking the immersed nanometer pore glass out of the solution and drying it in the air, wrapping and packaging the nanometer pore glass with resin, and obtaining the quantum dot-glass composite luminescent material after solidifying it. The composite luminescent material and the manufacturing method thereof are suitable for industrialization and have a broad application in the fields of illumination, LED, display and so on.

## Description

### FIELD OF THE INVENTION

The present invention relates to a luminescent material, and particularly to a quantum dot-glass composite luminescent material and the manufacturing method thereof.

### BACKGROUND OF THE INVENTION

The quantum dot known as nano-erystalline, is quasi-zero-dimensional nanomaterial composed of Group II - VI elements or Group III - V elements, consisting of a few atoms. Roughly speaking, the size in three dimensions of quantum dot is below 100 nanometers, the quantum dot looks like a minimal dot, and the motions of the internal electronic in every direction are confined so the quantum confinement effect is very significant. Because the quantum confinement effect can lead to the similar discontinuous electronic level structure of atom, therefore the quantum dot is also called as "artificial atom".

Generally the diameter of quantum dot is 1 to 10 nanometers. Because of quantum confinement of electrons and holes, the continuous band structure turns into discrete level structure with molecular characteristics, after stimulation the fluorescence can be emitted. Based on quantum effect, quantum dot has a broad application in the fields of solar cells, light-emitting device, optical biological markers and so on. Comparing to traditional organic dye, quantum dot has following incomparable fluorescence characteristics: (1) The excitation wavelength range of quantum dot is wide which enables single wavelength to excite all quantum dots, that is, the same excitation source can detect multiple of channels in the same time; (2) The quantum dot has accurate tunable emission wavelength. The different emission fluorescence quantum dot can be obtained by adjusting the sizes of particles, thus without changing the components and surface properties of particles, multicolor markers can be achieved by using same one material; (3) The quantum dot has larger stokers shift and fluorescent spectrum peak with stenosis symmetric, allowing using different spectrum characteristics of quantum dot at the same time. The emission spectrum does not appear to overlap or only a little overlap, thus the fluorescent spectrum can be easily recognized and distinguished; (4) The quantum dot is comparatively stable, the fluorescent spectrum can hardly be effected by the surrounding environment e.g. solvent, pH value, temperature and so on. It can stand repeated multiple excitation, taking time-resolved technique to detect that the signal can largely reduce the intensity of the background to obtain larger single-to-noise ratio.

The nanometer pore glass is SiO₂ glass with uniform connected pores. Normally the nanometer pore glass is obtained by means of phase-separation in alkali borosilicate glass, and repeated treatments in thermal acid solution resulting in the removal of boron-rich phase of phase glass. Because the SiO₂ content of nanometer pore glass is more than 96%, and it has the physics and the chemical properties similar to quartz glass, thus the nanometer pore glass is a good carrier material of luminescence material. For example, there are many researches on preparing composite luminescence material by doping rare earth luminescence ions and organic luminescence dry into nanometer pore glass. The composite material with excellent luminescent properties can be obtained if the luminescence quantum dots can be uniformly dispersed and doped in the nanometer pore glass. However, up to now, there is no report concerning the quantum dot-glass composite luminescence material of luminescence material.

### DISCLOSURE OF THE INVENTION

The technical problem of the present invention to be solved is to provide a quantum dot-glass composite luminescence material with tunable luminescence wavelength and to provide a manufacturing method of quantum dot-glass composite luminescence material which is easy to carry out and is suitable for industrialization.

The technical solution to solve the technical problem in the present invention is: providing a quantum dot-glass composite luminescence material, the base of which is nanometer pore glass. The nanometer pore glass is doped with luminescent quantum dot.

The quantum dot-glass composite luminescence material of the present invention, said quantum dot is water soluble or oil soluble ZnO, ZnS, CdS, CdSe or CdTe , or CdTe/ZnSe with core-shell structure, CdSe/ZnSe with core-shell structure , CdSe/ZnS with core-shell structure , CdSe/CdS with core-shell structure, CdS/ZnS with core-shell structure, or CdS/HgS with core-shell structure.

The quantum dot-glass composite luminescent material of the present invention, said nanometer pore glass is high purity SiO₂ glass with uniform connected pores, the volume of nanometer pores accounting for 25% to 40% of total volume of nanometer pore glass.

The quantum dot-glass composite luminescent material of the present invention, the composition of said nanometer pore glass is : according to weight percentage, SiO₂ is 94.0% to 98.0%, B₂O₃ is 1.0% to 3.0%, Al₂O₃ is 1.0% to 3.0%.

A manufacturing method of a quantum dot-glass composite luminescent material, includes the following steps:

step one, preparing an aqueous or organic solution of a single luminescent quantum dot, or a mixed aqueous or organic solution of two or more luminescent quantum dots;

step two, immersing the nanometer pore glass in the solution of the step one for at least ten minutes;

step three, taking the immersed nanometer pore glass out of the solution and drying it in the air, wrapping and packaging the nanometer pore glass with resin, and obtaining the quantum dot-glass composite luminescent material after solidifying it.

In the manufacturing method of a quantum dot-glass composite luminescent material of the present invention, the immersion time in step two is 0.5 to 5 hours.

The manufacturing method of a quantum dot-glass composite luminescent material of the present invention, in step three, wrapping and packaging the whole surface of nanometer pore glass under air isolation.

Comparing to the piror art, the quantum dot-glass composite luminescent material of the present invention, can emit blue, yellow, green, red, white light and so on under ultraviolet, purple light or blue light excitation. Comparing to traditional fluorescence powder or organic material, the quantum dot-glass composite luminescent material has multiple of advantages, as wide and continuous excitation spectrum, narrow and symmetric luminescent emission spectrum, good stability of light, resistance to photobleaching, while one element excitation can achieve more emission. Single material can emit fluorescence with different bands, and the emission wavelength and color of the quantum dot-glass composite luminescent material are tunable, through changing the kind and size of quantum dot, broadband continuous luminescence in the visible region can be achieved.

In addition, the manufacturing method of quantum dot-glass composite luminescence material of the present invention is simple and easy to carry out. The composite luminescence material and the manufacturing method are suitable for industrialization and have a broad application in lighting, LED, display field and so on.

### DESCRIPTION OF THE DRAWING

Further description of the present invention will be illustrated, which combined with drawings and embodiments in the drawings. In the drawings:

FIG. 1 is the ultraviolet visible light splitting spectrum and emission spectrum of quantum dot-glass composite luminescence material prepared in embodiment 1 of the present invention.

FIG. 2 is the flow chart of manufacturing method of quantum dot-glass composite luminescent material in the embodiment of the present invention.

### DETAILED DESCRIPTION OF ILLUSTRATED EMBODIMENTS

In order to make the purpose, the technical solutions and the benefits of the present invention more clearly understand, the following embodiments which combine with the drawings are provided to descript the present invention further details. It should be understood that the specific embodiments described herein is only used to explain the present invention, not used to limit the present invention.

A quantum dot-glass composite luminescent material is provided in the embodiment of the present invention, the base of which is nanometer pore glass. The nanometer pore glass is doped with luminescent quantum dot.

The quantum dot-glass composite luminescence material of the present invention, said quantum dot is water soluble or oil soluble ZnO, ZnS, CdS, CdSe or CdTe , or CdTe/ZnSe with core-shell structure, CdSe/ZnSe with core-shell structure , CdSe/ZnS with core-shell structure , CdSe/CdS with core-shell structure, CdS/ZnS with core-shell structure, or CdS/HgS with core-shell structure. The quantum dot-glass composite luminescent material of the present invention, said nanometer pore glass is high purity SiO₂ glass with uniform connected pores, the volume of nanometer pores accounting for 25% to 40% of total volume of nanometer pore glass. The quantum dot-glass composite luminescent material of the present invention, the composition of said nanometer pore glass is : according to weight percentage, SiO₂ is 94.0 to 98.0%, B₂O₃ is 1.0% to 3.0%, Al₂O₃ is 1.0% to 3.0%.

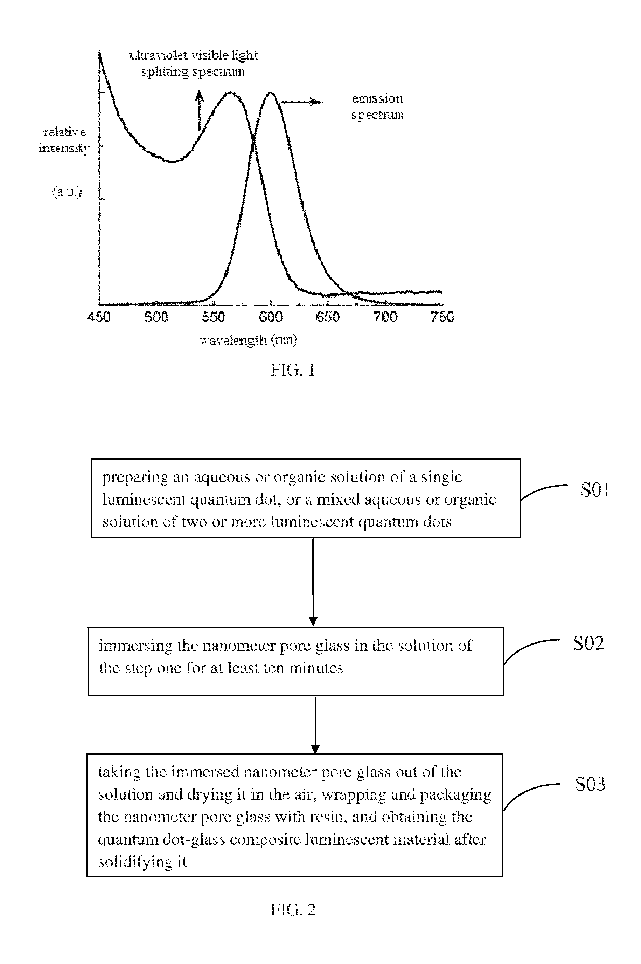

Shown in FIG. 2, FIG. 2 is the flow chart of manufacturing method of quantum dot-glass composite luminescent material in the embodiment of the present invention. The manufacturing method includes the following steps:

step one, preparing an aqueous or organic solution of a single luminescent quantum dot, or a mixed aqueous or organic solution of two or more luminescent quantum dots;

step two, immersing the nanometer pore glass in the solution of the step one for at least ten minutes;

step three, taking the immersed nanometer pore glass out of the solution and drying it in the air, wrapping and packaging the nanometer pore glass with resin, and obtaining the quantum dot-glass composite luminescent material after solidifying it.

In the manufacturing method of the present invention, the immersion time in step S02 is best for 0.5 to 5 hours. In step S03, to keep the stability of composite luminescent material, wrapping and packaging the nanometer pore glass which is doped with luminescent quantum dot with resin, and packaging the whole surface of nanometer pore glass under air isolation.

The quantum dot-glass composite luminescent material of the present invention, can emit blue, yellow, green, red, white light and so on under ultraviolet, purple light or blue light excitation. Comparing to traditional fluorescence powder or organic material, the quantum dot-glass composite luminescent material has multiple of advantages, as wide and continuous excitation spectrum, narrow and symmetric luminescent emission spectrum, good stability of light, resistance to photobleaching, while one element excitation can achieve more emission. Single material can emit fluorescence with different bands, and the emission wavelength and color of the quantum dot-glass composite luminescent material are tunable, through changing the kind and size of quantum dot, broadband continuous luminescence in the visible region can be achieved.

The manufacturing method of quantum dot-glass composite luminescence material of the invention is simple, easy to carry out and can manufacture the produces with stable property. The used luminescence quantum dot and nanometer pore glass can be purchased from market. The composite luminescence material and the manufacturing method are suitable for industrialization and have a broad application in lighting, LED, display field and so on, having good practicability and investment value.

The different compositions of the quantum dot-glass composite luminescence material and the manufacturing methods thereof are illustrated in the following embodiments.

Example 1:

Diluting water soluble CdTe quantum dot solution which is commercially available and has 600nm peak luminous wavelength with deionized water to obtain 10ml 0.1mg/ml CdTe luminescent quantum dot solution; immersing the nanometer pore glass in the solution for two hours and drying it in the air; wrapping and packaging the nanometer pore glass with epoxy resin, and obtaining the quantum dot-glass composite luminescent material after solidifying it. The quantum dot-glass composite luminescent material can emit red light under ultraviolet, purple light and blue light excitation. FIG. 1 is the ultraviolet-visible light spectrum and emission spectrum of quantum dot-glass composite luminescence material prepared in embodiment 1. Seen from FIG. 1, the red light with 600nm wavelengths is effective excited in blue light region.

Example 2:

Diluting water soluble CdTe quantum dot solution which is commercially available and has 600nm peak luminous wavelength with deionized water to obtain 10ml 0.5mg/ml CdTe luminescent quantum dot solution; immersing the nanometer pore glass in the solution for two hours and drying it in the air; wrapping and packaging the nanometer pore glass with silica gel, and obtaining the quantum dot-glass composite luminescent material after solidifying it. The quantum dot-glass composite luminescent material can emit red light under ultraviolet, purple light and blue light excitation.

Example 3:

Diluting water soluble CdTe quantum dot solution which is commercially available and has 540nm peak luminous wavelength with deionized water to obtain 10ml 1mg/ml CdTe luminescent quantum dot solution; immersing the nanometer pore glass in the solution for two hours and drying it in the air; wrapping and packaging the nanometer pore glass with poly(methyl methacrylate) (PMMA), and obtaining the quantum dot-glass composite luminescent material after solidifying it. The quantum dot-glass composite luminescent material can emit yellow light under ultraviolet, purple light and blue light excitation.

Example 4:

Diluting water soluble CdS quantum dot solution which is commercially available and has 600nm peak luminous wavelength with deionized water to obtain 5ml 0.2mg/ml CdS luminescent quantum dot solution; Diluting water soluble ZnS quantum dot solution which is commercially available and has 570nm peak luminous wavelength with deionized water to obtain 5ml 0.2mg/ml ZnS luminescent quantum dot solution; Obtaining 10ml mixed luminescent quantum dot solution by uniformly mixing the two solution; immersing the nanometer pore glass in the solution for two hours and drying it in the air; wrapping and packaging the nanometer pore glass with epoxy resin and obtaining the quantum dot-glass composite luminescent material after solidifying it. The quantum dot-glass composite luminescent material can emit yellow light and red light under ultraviolet, purple light and blue light excitation.

Example 5:

Diluting water soluble CdSe/ZnS luminescent quantum dot solution with core-shell structure which is commercially available and has 630nm peak luminous wavelength with deionized water to obtain 10ml 0.05mg/ml CdSe luminescent quantum dot solution; immersing the nanometer pore glass in the solution for five hours and drying it in the air; wrapping and packaging the nanometer pore glass with epoxy resin and obtaining the quantum dot-glass composite luminescent material after solidifying it. The quantum dot-glass composite luminescent material can emit red light under ultraviolet, purple light and blue light excitation.

Example 6:

Diluting water soluble CdSe/ZnSe luminescent quantum dot solution with core-shell structure which is commercially available and has 570nm peak luminous wavelength with deionized water to obtain 10ml 0.15mg/ml CdTe luminescent quantum dot solution: immersing the nanometer pore glass in the solution for 30 minutes and drying it in the air; wrapping and packaging the nanometer pore glass with silica gel and obtaining the quantum dot-glass composite luminescent material after solidifying it. The quantum dot-glass composite luminescent material can emit yellow light under ultraviolet, purple light and blue light excitation.

Example 7:

Diluting oil-soluble ZnS luminescent quantum dot solution which is commercially available and has 550nm peak luminous wavelength with cyclohexane to obtain 10ml 2mg/ml ZnS luminescent quantum dot solution; immersing the nanometer pore glass in the solution for 4 hours and drying it in the air; wrapping and packaging the nanometer pore glass with silica gel after surface cleaning and obtaining the quantum dot-glass composite luminescent material after solidifying it. The quantum dot-glass composite luminescent material can emit yellow light under ultraviolet, purple light and blue light excitation.

Example 8:

Diluting oil-soluble CdSe luminescent quantum dot solution which is commercially available and has 600nm peak luminous wavelength with chloroform to obtain 10ml 3mg/ml CdSe luminescent quantum dot solution; immersing the nanometer pore glass in the solution for 1 hour and drying it in the air; wrapping and packaging the nanometer pore glass with silica gel after surface cleaning and obtaining the quantum dot-glass composite luminescent material after solidifying it. The quantum dot-glass composite luminescent material can emit red light under ultraviolet, purple light and blue light excitation.

Example 9:

Diluting oil-soluble CdSe/CdS quantum dot solution which is commercially available and has 630nm peak luminous wavelength with chloroform to obtain 5ml 1mg/ml CdSe/CdS luminescent quantum dot solution; Diluting oil-soluble CdSe/ZnS quantum dot solution which is commercially available and has 540nm peak luminous wavelength with chloroform to obtain 5ml 1mg/ml CdSe/ZnS luminescent quantum dot solution; Obtaining 10ml mixed luminescent quantum dot solution by uniformly mixing the two solution; immersing the nanometer pore glass in the solution for 3 hours and drying it in the air; wrapping and packaging the nanometer pore glass with silica gel and obtaining the quantum dot-glass composite luminescent material after solidifying it. The quantum dot-glass composite luminescent material can emit yellow light and red light under ultraviolet, purple light and blue light excitation.

The disclosure described above is only a preferred embodiment in the present invention. Of course not to limit the scope of the right, so identical change made corroding to the present invention claim is still belongs to the scope of the invention.

## Claims

1. A quantum dot-glass composite luminescent material, the base of which is nanometer pore glass, wherein said nanometer pore glass is doped with luminescent quantum dot.

2. The quantum dot-glass composite luminescent material of claim 1, wherein said quantum dot is water soluble or oil soluble ZnO, ZnS, CdS, CdSe or CdTe, or CdTe/ZnSe with core-shell structure, CdSe/ZnSe with core-shell structure, CdSe/ZnS with core-shell structure, CdSe/CdS with core-shell structure, CdS/ZnS with core-shell structure, or CdS/HgS with core-shell structure.

3. The quantum dot-glass composite luminescent material of claim 1, wherein said nanometer pore glass is high purity SiO₂ glass with uniform connected pores, the volume of nanometer pores accounting for 25% to 40% of total volume of nanometer pore glass.

4. The quantum dot-glass composite luminescent material of claim 1 or claim 3, wherein, the composition of said nanometer pore glass is : according to weight percentage, SiO₂ is 94.0% to 98.0%, B₂O₃ is 1.0% to 3.0%, Al₂O₃ is 1.0% to 3.0%.

5. A manufacturing method of a quantum dot-glass composite luminescent material, includes the following steps:
step one, preparing an aqueous or organic solution of a single luminescent quantum dot, or a mixed aqueous or organic solution of two or more luminescent quantum dots;
step two, immersing the nanometer pore glass in the solution of the step one for at least ten minutes;
step three, taking the immersed nanometer pore glass out of the solution and drying it in the air, wrapping and packaging the nanometer pore glass with resin, and obtaining the quantum dot-glass composite luminescent material after solidifying it.

6. The manufacturing method of a quantum dot-glass composite luminescent material of claim 5, wherein, the immersion time in step two is 0.5 to 5 hours.

7. The manufacturing method of a quantum dot-glass composite luminescent material of claim 5, wherein, in said step three, wrapping and packaging the whole surface of nanometer pore glass under air isolation.
